# EUROPEAN PATENT APPLICATION

(11) **EP 3 001 014 A1**
(43) Date of publication of application: **30.03.2016**
(21) Application number: 15186138.2
(22) Date of filing: 21.09.2015
(51) Int. Cl.: F02C 7/045

(54) **IMPROVED NACELLE INLET AND ENGINE FAN HOUSING ASSEMBLY AND METHOD FOR MAKING SAME**

(30) Priority: 24.09.2014 US 201414494868
(71) Applicant: Honeywell International Inc., Morris Plains, NJ 07950 (US)
(72) Inventor: MICKELSEN, Justin C., Morris Plains, NJ New Jersey 07950 (US); ALSTAD, Shawn, Morris Plains, NJ New Jersey 07950 (US); KNOWLES, Mark, Morris Plains, NJ New Jersey 07950 (US); WATSON, Bill Russell, Morris Plains, NJ New Jersey 07950 (US)
(74) Representative: Houghton, Mark Phillip

(57) **Abstract**

A system and method is provided for coupling a nacelle inlet assembly to an engine fan housing structure that provides adequate clearance and access for removing a blisk fan from a turbofan engine. This is accomplished by utilizing a nacelle inlet forward compartment (106), referred to herein as the "D-lip"and an acoustic liner (304) that are inseparable and removable as an integral unit, providing sufficient clearance for removable of the blisk fan. The nacelle inlet assembly may be slidably coupled to the engine fan housing structure, minimizing assembly interfaces and therefore overall aircraft engine weight.

## Description

### TECHNICAL FIELD

The present invention generally relates to turbofan engines, and more particularly relates to a turbofan engine having an improved nacelle inlet and engine fan housing assembly and method for making same.

### BACKGROUND

Aircraft engine competitiveness is typically determined by attributes such as performance, cost, reliability, and weight. Performance generally includes aerodynamic efficiency and acoustics, and the acoustics are continually driven to be quieter by regulatory requirements and the market. Therefore, in order to improve aircraft engine competiveness, architectural design changes may be required.

The aerodynamically streamlined inlet section of an aircraft engine is generally referred to as the nacelle inlet and is typically comprised of multiple components coupled to an engine fan housing and bypass structure that surrounds the bulk of the aircraft engine block. Much of the noise in an aircraft engine comes from a fan assembly that is housed within an engine fan housing structure. The fan assembly includes a fan rotor hub centered on and rotatable about an axially extending centerline of the engine. A plurality of fan blades extends radially out from the fan rotor hub. These blades may be detachable or a part of a singular, machined or molded, fan (such as an integrally bladed rotor "IBR" or blisk fan). The opening of the nacelle inlet assembly typically has an aerodynamic shape that is narrow near the inlet of the turbofan engine and widens internally near the fan.

The noise generated by the fan and emitted from the front of the aircraft engine may be reduced through acoustic treatment of the engine inlet (nacelle). The employment of materials to dampen one or more noise frequencies is referred to as acoustic treatment, and the effectiveness of acoustic treatment that can be incorporated into the nacelle and surrounding parts is limited by the assembly and design constraints associated with an aircraft engine. Generally, these constraints require that each part of the aircraft engine be assembled in sequence with adequate clearance and access to perform all necessary assembly steps and processes. When the blades of the fan are not detachable (e.g. such as in the case of a blisk fan), making provisions for adequate structural integrity, clearance, access, and removal of the fan restricts the amount of acoustic treatment that may be employed in the nacelle inlet

In addition, gaining access for maintenance, repair or replacement on a blisk fan blade in an aircraft engine generally requires removal of the entire fan assembly, which increases labor time, the number of assembly interfaces that must be interacted with, and the number of parts that must be manipulated. Additionally, blisk fan usage may influence the distribution of parts and weight throughout the nacelle inlet assembly and engine fan housing structure. The number of parts that go into the engine, the number of assembly interfaces in the engine, and the way in which loads are carried by the engine each contribute to the total engine weight. Therefore, the engine architectural decision to utilize a blisk fan may decrease overall engine weight.

Accordingly, it would be desirable to provide a nacelle inlet assembly for use in an engine fan housing structure that provides adequate clearance for accessing and removing a blisk fan from a turbofan engine. It would also be desirable to provide a nacelle inlet assembly that may be slidably coupled to the engine fan housing structure, thus minimizing assembly interfaces and overall aircraft engine weight. It would be further desirable to provide a nacelle inlet assembly and engine fan housing structure that enables efficient distribution of load and increased acoustic treatment.

### BRIEF SUMMARY

This summary is provided to introduce a selection of concepts in a simplified form that are further described below in the Detailed Description section. This summary is not intended to identify key features or essential features of the claimed subject matter, nor is it intended to be used as an aid in determining the scope of the claimed subject matter.

In view of the foregoing, there is provided a nacelle inlet assembly for use in a turbofan engine, the nacelle inlet assembly comprising a substantially cylindrical acoustic liner having a circular inlet edge and a D-lip inseparably coupled to the circular inlet edge.

There is also provided a nacelle inlet assembly for use in a turbofan engine that includes an engine fan housing structure with a substantially circular opening of a first diameter surrounding an integrally bladed rotor fan. The nacelle inlet assembly comprises a substantially cylindrical housing configured to slidably couple to the substantially circular opening of the engine fan housing structure. The cylindrical housing has a second diameter smaller than the first diameter. The nacelle inlet assembly also comprises an acoustic liner forming an inner surface of the cylindrical housing, and a D-lip inseparably coupled to the acoustic liner. The bladed rotor fan is removable through the circular opening only when the cylindrical housing is removed.

A method is also provided for integrally bladed rotor fan access in a turbofan engine having an engine fan housing structure with a substantially circular opening. The method comprises forming a substantially cylindrical nacelle inlet assembly of a first length, having a first diameter larger than a diameter of the integrally bladed rotor fan and smaller than a diameter of the circular opening of the engine fan housing structure. A circular inlet edge of the acoustic liner is inseparably coupled to a D-lip to form an acoustic liner/D-lip assembly.

Other desirable features and advantages will become apparent from the following detailed description and the appended claims, taken in conjunction with the accompanying drawings and this background.

### BRIEF DESCRIPTION OF THE DRAWINGS

A more complete understanding of the subject matter may be derived by referring to the following Detailed Description and Claims when considered in conjunction with the following figures, wherein like reference numerals refer to similar elements throughout the figures, and wherein:
FIG. 1 is a front view of a traditional aircraft turbofan engine;
FIG. 2 is side view of the traditional aircraft turbofan engine shown in FIG. 1 engine;
FIG. 3 is a cross-sectional view of a front portion of a traditional turbofan engine;
FIG. 4 is cross-sectional view of a front portion of a turbofan engine in accordance with an exemplary embodiment;
FIG. 5 is a cross-sectional view a front portion of the turbofan engine shown in FIG. 4 with an integral D-lip\acoustic liner assembly removed in accordance with an exemplary embodiment; and
FIG. 6 is a partially exploded, three-dimensional view of a nacelle inlet assembly slidably removable from a cylindrical engine fan housing structure in accordance with the exemplary embodiment.

### DETAILED DESCRIPTION

The following Detailed Description is merely exemplary in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over any other implementations. Furthermore, there is no intention to be bound by any expressed or implied theory presented in the preceding Technical Field, Background, Brief Summary or the following Detailed Description.

For the sake of brevity, functional aspects of various turbofan engine systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The following descriptions may refer to elements or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Various embodiments are directed to a combined nacelle inlet assembly and engine fan housing structures in gas turbine engines, and methods for producing the same. The embodiments described herein are merely an example and serve as a guide for implementing the novel systems and method herein on any industrial, commercial, or consumer turbofan application. As such, the examples presented herein are intended as non-limiting.

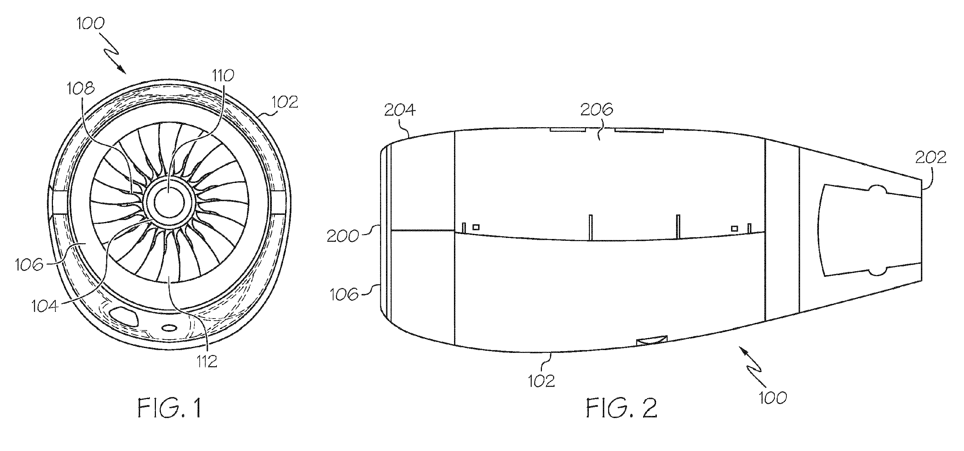

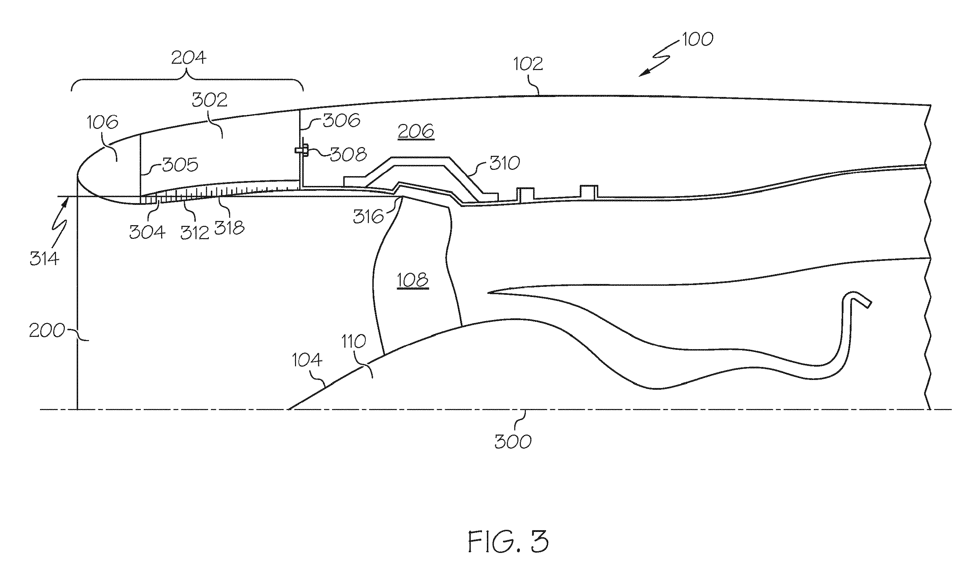

FIGS. 1 and 2 are front and side views, respectively, of a traditional aircraft turbofan engine **100.** The turbofan engine **100** is a component of the aircraft's propulsion system. It includes an aerodynamically smooth outer covering referred to as the nacelle cowling **102** that wraps around and substantially encases the engine, wider at the front or inlet end **200** of the turbofan engine and narrower at the back or exhaust end **202** of the turbofan engine. A nacelle inlet assembly **204** circumscribes the inlet cavity **112** and is radially spaced from an engine centerline (for example engine centerline **300** of FIG. 3), forming a predetermined circumferential envelope. A subcomponent of the nacelle inlet assembly **204** is a nacelle inlet forward compartment, formed by a D-shaped Lipskin, referred to herein as the "D-lip" **106.** The engine fan assembly **104** includes a plurality of fan blades **108** that are attached to, and extend radially out from, a fan rotor hub **110** centered within inlet cavity **112.** In a traditional aircraft turbofan engine **100,** an engine fan housing structure **206** is attached to the nacelle cowling **102.**

FIG. 3 is a cross-sectional view of a front portion of the turbofan engine shown in FIGS. 1 and 2. Only the upper half of the engine, delineated by centerline **300,** is shown for clarity. As can be seen, the nacelle inlet assembly **204** comprises a number of separate, but detachable, parts including nacelle inlet outer skin **302,** "D-lip" **106,** and acoustic liner **304.** Nacelle inlet outer skin **302,** a subcomponent of nacelle cowling **102,** is permanently coupled to acoustic liner **304** but detachably coupled to the engine fan housing structure **206** at, for example, aft bulkhead **306.** D-lip **106** is likewise permanently coupled to nacelle inlet outer skin **302** and acoustic liner **304.** Similarly, nacelle inlet outer skin **302** is detachably coupled to nacelle cowling **102.** While the above describes one arrangement for coupling D-lip **106,** nacelle inlet outer skin **302,** and acoustic liner **304** together, it should be clear that other fastening arrangements may be employed including the use of screws, bolts, adhesives, and the like.

Engine fan assembly **104,** including fan rotor hub **110** and a plurality of fan blades **108** (only one of which is shown), is positioned for rotation such that the tips of fan blades **108** are accommodated within a fan containment structure **310** that is positioned circumferentially around fan rotor hub **110** to protect the aircraft from damage by the fan blades **108.**

An exposed contoured surface **312** is formed along at least a section of the of nacelle inlet assembly **204** including at least along a section of the exposed surface of acoustic liner **304** in accordance with well-known design considerations. Acoustic liner **304** is also permanently coupled to the inside aft region and nacelle inlet forward bulkhead **305,** at D-lip **106.** In the acoustic treatment of a traditional nacelle inlet, the dimensions and contours of acoustic liner **304** are dictated by the aerodynamic shape of the inlet end **200** and tunability is limited to the selection of a single noise frequency centered in a limited noise frequency range emitted by the fan assembly that most needs dampening. Therefore, the acoustic treatment in a traditional nacelle inlet typically has a constant cross sectional thickness and a uniform internal pattern that results in a narrow predetermined frequency range dampening effectiveness.

With continued reference to FIG. 3, a line **314** is drawn forward from the tip **316** of fan blade **108** and is substantially parallel to centerline **300.** As can be seen, line **314** intersects acoustic liner **304** at point **318** making it clear that the fan assembly **104** could not be removed from the engine in a direction without removal of the acoustic liner **304.** As a consequence, the entire assembly comprising D-lip **106,** nacelle inlet outer skin **302,** and acoustic liner **304** would have to be disassembled in order to permit forward removal of a blisk fan from engine fan assembly **104.**

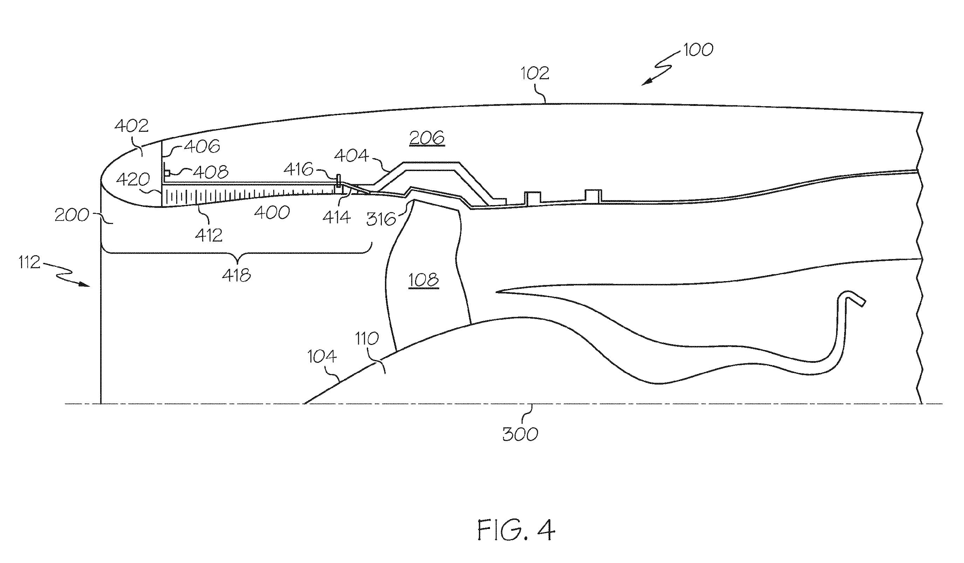

FIG. 4 is a cross-sectional view of a front portion of a turbofan engine in accordance with an exemplary embodiment. In the exemplary embodiment, a substantially cylindrical acoustic liner **400** is inseparably coupled to a D-lip **402** at a circular inlet edge **420** and extends to fan containment structure **404; the** combination of the D-lip **402** and acoustic liner **400** comprise the nacelle inlet assembly **418.** The engine fan housing structure **206** has been extended to D-lip **402** to which it may be detachably coupled by means of screws, bolts and the like (This is in contrast with FIGs 2 and 3, wherein engine fan housing structure **206** only extends to nacelle inlet outer skin **302** and couples at aft bulkhead **306).**

The inside exposed contoured surface **412** of the exemplary acoustic liner **400** has an acoustically determined contour (i.e., an aerodynamic profile of variable thickness) that may now be longer than the acoustic liner **304** depicted in FIG 3. The increased length enables more extensive acoustic treatment that may extend further into the engine fan housing structure **206,** and may extend under the fan containment structure **404,** to tapered end **414.** For example, acoustic liner **400** may have a thickness that varies along its length, based on one or more noise frequencies selected for dampening, providing the ability to"tune" a plurality of frequencies, more than simply that which is dictated by the aerodynamic shape of the inlet and the selection of single, noise frequency centered in a limited noise frequency range.

The increased length of the engine fan housing structure **206** in the exemplary embodiment also provides an improvement in overall weight and weight distribution. To begin with, nacelle inlet forward bulkhead **406** (which includes a plurality of fasteners **408)** is closer to the inlet end **200** of the turbofan engine than the aft bulkhead **306** plus fasteners **308** shown in the nacelle inlet assembly **204** of FIG. 3. Relocating the majority of fasteners to the nacelle inlet forward bulkhead **406** as described, removing bulkhead **306** (shown in FIG. 3) and adding length to the acoustic treatment potentially reduces the number of fasteners **408** that are required to hold the nacelle inlet assembly **418** to the fan housing assembly during extreme loading conditions, increasing the separation of overall bulkhead weight from the engine core weight, improving weight distribution. In practice, the number of fasteners **408** required to attach the structures may be reduced by more than fifty percent.

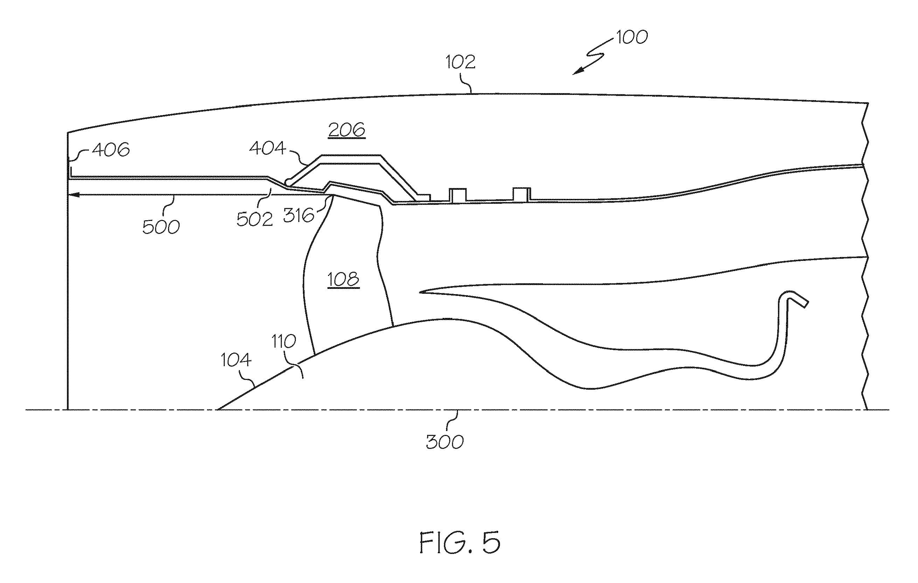

FIG. 5 is a cross-sectional view a front portion of the turbofan engine shown in FIG. 4 with the integral D-lip/acoustic liner assembly removed in accordance with an exemplary embodiment. As can be seen, by removing the integral D-lip/acoustic liner assembly, clearance is provided for removal of the blisk fan from the engine fan housing structure **206** as is indicated by arrow **500** extending forward from the tip **316** of fan blade **108.** FIG. 5 also depicts a sloped region **502** that extends under fan containment structure **404,** formed to accommodate the tapered end **414** of acoustic liner **400** illustrated in FIG. 4.

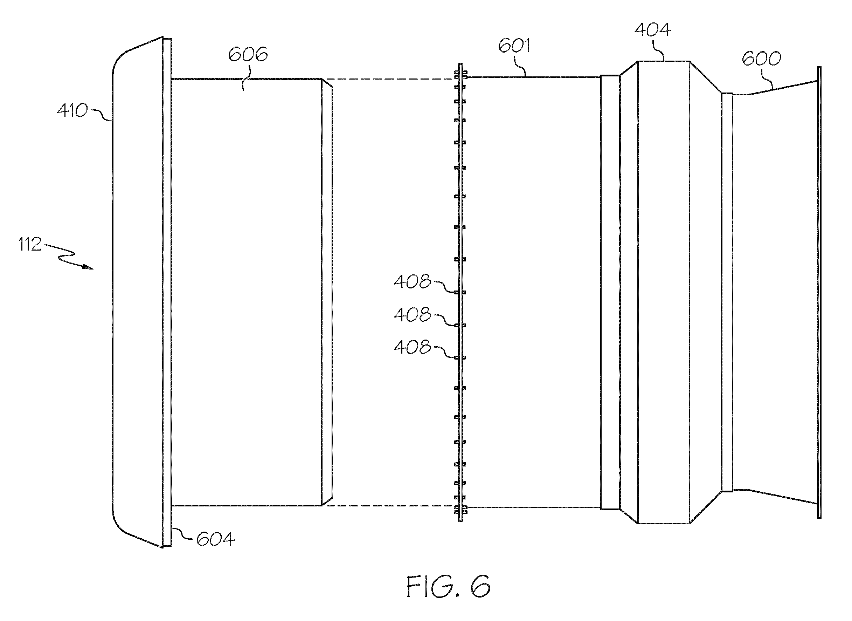

FIG. 6 is a partially exploded, three-dimensional view of a nacelle inlet assembly **418** slidably removable from a cylindrical engine fan housing structure **600** in accordance with the exemplary embodiment described above. The nacelle inlet assembly **418** includes a cylindrical housing **606** having a diameter smaller than the opening of the engine fan housing structure **600.** The cylindrical acoustic liner **400,** described in connection with FIG. **5****,** may be coupled to an inside surface of a cylindrical housing **606** and therefore occluded in this view. Alternatively, the cylindrical acoustic liner **400** may comprise the cylindrical housing **606.** The D-lip **402** is shown extending radially outward from, and coupled to, a circular inlet edge **420** of the acoustic liner **400.**

Engine fan housing structure **600** is shown having a forward extending substantially cylindrical opening **601** that terminates at fan containment structure **404.** The forward edge of the substantially cylindrical opening **601** is provided with one or more exemplary fasteners **408.** Exemplary fasteners **408** may be spaced along the opening of the engine fan housing structure **600.** The cylindrical housing **606** of nacelle inlet assembly **418** has a diameter slightly smaller than that of the circular opening of engine fan housing structure **600** so as to permit nacelle inlet assembly **418** to be slidably received within, and coupled to, engine fan housing structure **600** and coupled thereto via fasteners **408.** As the acoustic liner (obscured in this view) may be coupled to, or comprise, the inner surface of the cylindrical housing **606,** the acoustic liner may be coupled via fasteners to the engine fan housing structure **600.**

Thus, there has been provided a system and method for coupling a nacelle inlet assembly to an engine fan housing structure that provides adequate clearance and access for removing a blisk fan from a turbofan engine. This is accomplished by utilizing a nacelle inlet forward compartment D-lip and an acoustic liner that are inseparable and removable as an integral unit thus providing sufficient clearance for removable of the blisk fan. The nacelle inlet assembly may be slidably coupled to the engine fan housing structure, minimizing assembly interfaces and overall aircraft engine weight.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A nacelle inlet assembly for use in a turbofan engine, the nacelle inlet assembly comprising:
a substantially cylindrical acoustic liner having a circular inlet edge;
a D-lip inseparably coupled to circular inlet edge.

2. The nacelle inlet assembly of Claim 1, wherein the nacelle inlet assembly further comprises a substantially cylindrical housing having a first length and a first diameter wherein the first diameter is larger than a fan diameter of the turbofan engine.

3. The nacelle inlet assembly of Claim 2, wherein the acoustic liner is coupled to an inside surface of the cylindrical housing.

4. The nacelle inlet assembly of Claim 2, wherein a thickness of the acoustic liner varies along its length.

5. The nacelle inlet assembly of Claim 4, wherein the thickness of the acoustic liner is related to at least one noise frequency.

6. The nacelle inlet assembly of Claim 5, wherein the turbofan engine further comprises an engine fan housing structure comprising a fan containment structure.

7. The nacelle inlet assembly of Claim 6, wherein the acoustic liner extends under the fan containment structure.

8. A method for providing integrally bladed rotor fan access in a turbofan engine having an engine fan housing structure with a substantially circular opening, the method comprising:
forming a substantially cylindrical nacelle inlet assembly of a first length, having a first diameter larger than a diameter of the integrally bladed rotor fan and smaller than a diameter of the circular opening of the engine fan housing structure; and
inseparably coupling a circular inlet edge of the acoustic liner to a D-lip to form an acoustic liner/D-lip assembly.

9. The method of Claim 18 further comprising slidably coupling the nacelle inlet assembly to the substantially circular opening of the engine fan housing structure of the turbofan engine.

10. The method of Claim 19 further comprising fastening the D-lip via at least one fastener to the circular opening of the engine fan housing structure of the turbofan engine.
